# EUROPEAN PATENT APPLICATION

(11) **EP 4 530 808 A1**
(43) Date of publication of application: **02.04.2025**
(21) Application number: 23200379.8
(22) Date of filing: 28.09.2023
(51) Int. Cl.: G06F 3/0482, G06F 1/16, G06F 3/16, G06F 16/332

(54) **IMPROVEMENTS IN CONTENT INTERACTION ON A COMPUTING DEVICE**

(71) Applicant: AMERIA AG, 69124 Heidelberg (DE)
(72) Inventor: Metter, Albrecht, 69120 Heidelberg (DE); Savotin, Artem, 04053 Kyiv (UA)
(74) Representative: Best, Bastian

(57) **Abstract**

Disclosed is a method of interacting with a data processing apparatus. The method may comprise a step of receiving a first input from a user comprising a content request in natural language. The method may comprise a step of providing one or more content options associated with the content request to the user. The method may comprise a step of receiving a second user input from the user. The second user input may indicate a selection from the one or more content options. The method may comprise a step of providing a content item associated with the selected content option on a display of the data processing apparatus. The method may comprise a step of receiving a third user input from the user. The third user input may be a touchless gesture input. The third user input may cause an interaction with the content item on the display. In addition, a corresponding data processing apparatus and a computer program is disclosed.

## Description

### TECHNICAL FIELD

The present disclosure generally relates to the field of human-machine interface design in computer devices, and more particularly to techniques for improving content creation with a computing device. Certain embodiments may provide for a new interaction paradigm for interacting with computing devices.

### BACKGROUND

Computing devices have become an essential part of our daily lives. One type of computing device includes portable computers also known as laptops or notebooks which provide the user with a convenient way to work, communicate, and entertain themselves on the go. Portable computers typically include a display and keyboard that are directly connected to the main case, all sharing a single power source.

Despite evolutionary developments of their design (e.g., form factor, materials) and technical features (e.g., battery life, performance), portable computers have remained essentially the same over a long time. For example, the human-machine interface of typical portable computers, which consists mainly of a keyboard and a pointing device such as a trackpad or trackpoint, have remained practically unchanged for decades. As a result, the ways how users interact with portable computers have remained relatively static, and so are the use cases in which these devices are employed nowadays.

A significant limitation of traditional human-machine interfaces, especially but not only in portable computers, is their largely typing-based approach and their reliance on physical input devices like the keyboard and trackpad. As a result, these computers are typically following the old paradigm of thinking about personal computing like using a typewriter where the computer is a tool that the user interacts with primarily by typing text, in addition to moving a mouse pointer. They fall short of providing new user interface paradigms that are ready for future mega trends and emerging use cases such as, without limitation, 3D content creation and consumption, virtual reality, the Metaverse, speech-to-text, artificial intelligence, chat bots, and gaming.

It is therefore an objective of the present disclosure to provide techniques for an improved human-machine interface for computing devices, thereby overcoming the above-mentioned disadvantages of the prior art at least in part.

### SUMMARY OF THE DISCLOSURE

The objective is solved by the subject-matter defined in the independent claims. Advantageous modifications of embodiments of the present disclosure are defined in the dependent claims as well as in the description and the figures.

As a general overview, certain aspects of the present disclosure provide an entirely new human-machine interface which follows a revolutionary new interaction paradigm. The interaction paradigm is built on the principle of:
1. "Tell what you want" (also referred to as a content request), which allows users to communicate with their computer devices in the most intuitive way, namely by merely stating their desires.
2. "Select from proposed options" (also referred to as one or more content options), where the system responds with intelligent suggestions, simplifying the user's decision-making process and streamlining the journey to desired information or content.
3. "Interact with the result" (also referred to as a content item), where the user engages with the resulting content item using the full spectrum of human expression, potentially including gestures (both touch-based and touchless), voice, and more.

This innovative approach transcends conventional user experiences. It not only enhances user satisfaction but fundamentally transforms the way humans connect with the digital world. Information retrieval becomes a fluid, personalized, and dynamic process, fostering creativity and efficiency. Importantly, aspects of the present disclosure empower users to harness their most instinctive and natural behaviors when engaging with computer devices.

With this paradigm shift, the true potential of human-computer interaction is unlocked, bridging the divide between technology and human intuition. This way, one overall objective of the present disclosure is to pave the way to a future where the computer understands its user as effortlessly as a trusted companion and where technology harmonizes seamlessly with the user's innate abilities.

One aspect of the present disclosure relates to a method of interacting with a data processing apparatus. The method may be computer-implemented. The method may comprise a step of receiving a first user input from a user. The first user input may comprise a content request. The method may comprise a step of providing one or more content options associated with the content request to the user. The method may comprise a step of receiving a second user input from the user. The second user input may indicate a selection from the one or more content options. The method may comprise a step of providing a content item associated with the selected content option on a display of the data processing apparatus. The method may comprise a step of receiving a third user input from the user. The third user input may cause an interaction with the content item on the display.

Looking first at the "Tell what you want" part of the new interaction paradigm, the content request may be in natural language. Accordingly, users are allowed to express their intent, i.e., a content request, completely naturally and/or in a conversational manner. This aspect provides various advantages. First of all, it improves user engagement and reduces the learning curve for interacting with the computer system. The user is no longer forced to learn and use machine-acceptable interactions forms, such as using specific pre-defined commands, nor is the user forced to use the data processing apparatus essentially like a typewriter anymore. Since, users do not need to learn complex commands, this reduces the cognitive load. It also accommodates users with varying levels of technical expertise and those with physical disabilities, making the interaction more inclusive.

Turning to the "Select from proposed options" part of the new interaction paradigm, the step of receiving a second user input from the user to indicate a selection from the one or more content options has its own unique advantages. One of these advantages is efficient information retrieval, since by providing users with contextually relevant options, the system significantly accelerates the process of finding desired information, reducing search times and frustration. Furthermore, in terms of personalization, the system can adapt to individual preferences and behaviors, offering suggestions tailored to each user's specific needs and interests. It also minimizes the risk of misunderstandings or misinterpretations by presenting curated options related to the user's content request.

Further turning to the "Interact with the result" part of the new interaction paradigm, the step of receiving a third user input to cause an interaction with the content item on the display also has its own unique advantages. First of all, it provides a particularly seamless transition, since users can seamlessly transition from expressing their content request to interacting with the resulting content, reducing friction in the interaction process. It also facilitates customized interaction, as users can engage in various ways with the content, such as reading, editing, playing, sharing, or taking further actions, making the interaction highly adaptable to different scenarios. By providing users with the content they desired and enabling immediate interaction, this step also leads to increased user satisfaction.

Overall, the new interaction paradigm also leads to a demonstrable reduction in the time required to perform specific tasks or retrieve information from a computer system. For instance, if user requests are processed more efficiently, leading to faster responses, this results in a reduction in processing time. The new interaction paradigm also optimizes the allocation of computational resources within the computer system. For example, by better predicting user intent and delivering relevant content options, it reduces unnecessary data processing and thereby conserves system resources. The new interaction paradigm also allows the computer system to handle a higher volume of user interactions or requests simultaneously, leading to an increased throughput.

According to another aspect of the present disclosure, the first user input, i.e., the one which comprises the content request, is a touchless input. In particular, the first user input can comprise a voice input. Accordingly, this provides an even greater degree of natural human-computer interaction because speaking is the most efficient form to pass information for humans. This way, the "Tell what you want" part of the new interaction paradigm becomes an even more intuitive "Say what you want".

In addition to the voice input, the first user input may further comprise a touchless gesture input. For example, the user might say "Write a compelling project status report for my boss" while pointing at a specific location within an email draft which is currently shown on the display of the data processing apparatus. This can provide contextual information for the voice input and may thus improve the one or more content options.

It should be understood that, in the above aspect, the temporal order of the two touchless inputs which form the first user input, i.e., the voice input and the touchless gesture input, is flexible. For example, both user inputs may happen essentially at the same time, or the user might first speak (voice input) and then point (touchless gesture input), or the other way around.

In addition or alternatively, also other forms of the first user input may be supported, such as (typed) text input. This might be helpful in scenarios where spoken input is less practical, such as when the data processing apparatus is used in public places like on public transportation or in a cafe, to name just some examples. Also such non-voice input variants may be combined with an additional touchless gesture input as described above.

According to another aspect of the present disclosure, the third user input to cause an interaction with the content item on the display may be a touchless gesture input. This way, another significant improvement in the human-machine interaction is provided, which involves numerous technical advantages. First of all, users may be able to interact with the content item more efficiently using touchless gestures because the time it takes to navigate through the content item or use it otherwise is reduced. The touchless gesture input may also offer reduced input latency compared to traditional input methods. Furthermore, touchless gesture input can reduce physical strain on users, especially in scenarios where prolonged physical interaction with input devices is required. It also makes interaction with the computer system more accessible to individuals with physical disabilities or limitations. In one example, the user might perform a touchless pointing gesture with a finger to indicate a particular location on the display, which then causes a placement of the content item at or near that location. In another example, the user might perform a touchless scrolling gesture, which then causes a scrolling through a webpage with search results, which is the content item in this example.

According to another aspect of the present disclosure, the one or more content options associated with the content request may be provided on a touchscreen. In particular, the touchscreen is a touchscreen separate from the display of the data processing apparatus. Separating the display of proposed options from the (main) display of the data processing apparatus, where the final content item is shown, can offer several advantages in terms of usability and user experience. First of all, this separation allows for multi-modal interaction, where users can engage with content through both touch and visual input. Users can express their intent via voice or text while visually examining the proposed options on the touchscreen, and then interact with the chosen content item on the main display. This multi-modal approach caters to different user preferences and accessibility needs. Furthermore, by displaying the proposed options on a separate touchscreen, the main display remains uncluttered, providing a clean and focused view of the content item or other displayed content. This reduces visual distractions and enhances the user's ability to concentrate on the selected content. The separation of displays allows for the main display to focus entirely on the selected content item, providing ample screen real estate for immersive interaction, whether it involves reading, editing, or other actions. Also, users have greater control over the selection and interaction process when the touchscreen is separate. They can physically manipulate the touchscreen for content options while maintaining a clear view of the main display. This separation enhances user agency and control. Separating the proposed options from the main display can also allow for larger, more detailed previews or representations of content options on the touchscreen. This can improve the user's ability to assess and select the most relevant content item. Moreover, the touchscreen for proposed options can be positioned at an ergonomic position, height and/or angle, optimizing it for touch interactions. This can lead to more comfortable and accurate input, especially when compared to reaching for touch inputs on the main display. Lastly, in scenarios where the content may be sensitive or confidential, separating the displays can provide an additional layer of privacy. Content options can be previewed privately on the touchscreen before selecting what is displayed on the main screen, for instance in a screen-sharing session.

In a particular implementation, the touchscreen may be a touchscreen arranged on a user-facing surface of a base housing of the data processing apparatus when the data processing apparatus is a portable computer. This way, an entirely new class of data processing apparatus is provided which relies on a largely virtualized human-machine interface. In addition, the human-machine interface of the data processing apparatus can flexibly adapt to the task at hand. Introducing a touchscreen, preferably instead of a physical computer keyboard, enables this flexibility to an extent unheard of before. More specifically a user is now able to interact with the data processing apparatus in a more intuitive way for completing the task at hand. For this purpose, a user can provide any type of input.

According to another aspect of the present disclosure, the interaction with the content item may comprise adjusting one or more characteristics of the content item. The one or more characteristics may comprise a position of the content item on the display, a position of the content item within an application and/or a size of the content item. This way, further interaction with the content item is enabled. For example, if a content item was provided and is displayed on the display of the data processing apparatus, a user can reposition the content item (e.g., by providing touchless gesture input such as a touchless pointing gesture). This interaction may become additionally handy when the content item is embedded within an application. For example, if an image about a certain topic was requested as content item for use within a presentation creation application (e.g., Microsoft PowerPoint) and the image is provided within some slide of the presentation, a user may point on the image and move it via touchless gesture control to another position or slide, or may resize the image.

According to another aspect of the present disclosure, the interaction with the content item may comprise one or more of the following: content consumption (e.g., reading text-based content, such as articles, e-books, or documents, viewing images, photos, videos, or visual representations, listening to audio content, including podcasts or music), content manipulation (e.g., editing text, images, or multimedia content, making changes to documents, images, or videos, adding comments, highlights, or annotations to content, such as marking up documents or drawing on images, cropping and/or resizing content like images), content interaction (e.g., navigating through content, such as flipping through pages, scrolling, or seeking in videos or audio tracks, interacting with hyperlinks to access related or external content, operating interactive elements like buttons, forms, or menus that users can interact with), content sharing and collaboration (e.g., sharing content with others via messaging, email, or social media, editing or annotating content simultaneously, fostering teamwork and communication), content organization and management (e.g., organizing content by applying filters or sorting options, saving or bookmarking content for future reference, assigning tags or categories to content for easier retrieval), content augmentation and enrichment (e.g., translating content to other languages, accessing additional information or context related to the content, such as definitions, references, or related articles), content export and saving (e.g., exporting content to different formats, saving it locally, saving content to cloud storage for accessibility across devices), content presentation customization (e.g., adjusting the layout, font size, and/or appearance of text-based content for improved readability, controlling the playback speed of audio or video content), content integration (e.g., extracting data or information from content, such as tables or text from documents, interacting with content within the context of other applications, like sharing a document with a note-taking app).

According to another aspect of the present disclosure, the interaction with the content item may comprise indicating a further content request associated with the content item. In other words, an iterative way of improving and finetuning the requested content item by issuing a further content request is provided. The above-explained third user input, which serves to cause an interaction with the content item on the display, e.g., by touchless gesture input, may thus become part of the context for another content request (i.e., another first user input) in the next interaction cycle. This may be done for an arbitrary number of iterations until the user is fully satisfied with the result (i.e., the content item). The ability to iterate over the content item offers several advantages. For example, it enables a particularly seamless and continuous interaction flow, allowing users to refine their content request or actions without the need to start over from scratch. This continuous cycle reduces interruptions and maintains user engagement. Users can progressively refine their content request and interactions, leading to more precise and relevant results over time. This iterative process enhances the quality of the content presented to the user. By carrying over the context and previous actions into the next interaction cycle, users are relieved of the cognitive burden of rephrasing requests or reselecting options. This reduces cognitive load and makes interactions more efficient. By retaining context and user history, the system can reduce frustration caused by misunderstandings or incorrect responses in earlier interaction cycles. Users can correct or adjust their requests more easily. The system can also adapt to user preferences and behavior over multiple interaction cycles. By analyzing past interactions, the system can offer increasingly tailored content suggestions, enhancing the user's experience. Furthermore, as users iterate through interaction cycles, they can quickly home in on the desired content or action. This can lead to faster task completion, especially for complex tasks that require multiple steps or refinements. Generally, users are also more likely to achieve their goals and find the content they desire through iterative interactions. This can result in increased user satisfaction and a positive perception of the system's effectiveness. Lastly, new users can benefit from a smoother onboarding process as they receive guided feedback and suggestions from the system during iterative interactions, helping them become proficient more quickly.

According to another aspect of the present disclosure, providing the one or more content options may comprise displaying the one or more content options on a touchscreen of the data processing apparatus. Additionally or alternatively, providing the content item may comprise displaying the content item on the display of the data processing apparatus. This way, a differentiation between providing and actually displaying of the content options and/or items is made. While providing may refer to any type of generation and/or corresponding indication that the content options and/or items are completed, displaying them actually refers to showing/presenting them to the user via corresponding presentation means (e.g., display or touchscreen of the data processing apparatus).

According to another aspect of the present disclosure, the method may further comprise a step of receiving a fourth user input. In particular, the fourth user input may comprise a touch input on a touchscreen of the data processing apparatus, such as the touchscreen mentioned further above. To this end, the touchscreen may display a user-selectable control element, such as a button or other affordance, which can be selected by way of the fourth user input. The method may further comprise a step of generating, upon receiving the fourth user input, a control command to cause a display of a user dialog on the display of the data processing apparatus. The user dialog may prompt the user to enter the first user input indicating the content request. This way, system behavior with respect to provision of content items can be controlled. For this purpose, the fourth user input serves as a mean for turning on and off the disclosed process according to the new interaction paradigm. If the user provides such an input, the dialog indicates to the user that a content request can be provided. If this dialog is not displayed (e.g., upon booting of the data processing apparatus or after again providing the same fourth user input to turn off the technique and hide the dialog) the user knows that other types of input (e.g., voice input) will not be processed and so forth. On the other hand, if the dialog is displayed and prompts the user for entering the first user input, the user is aware of the system's current technical state (e.g., waiting for a first user input). Put differently, the fourth user input and/or the user dialog relates to the internal state prevailing in the data processing apparatus and thus enables the user to properly operate the data processing apparatus. As a result, human computer interaction (HCI) is further improved.

According to another aspect of the present disclosure, the method may further comprise a step of activating, upon receiving the fourth user input, a speech-to-text module of the data processing apparatus. The speech-to-text module may be configured to convert a voice input into a control command based on which the one or more content options are provided. This way, the system only considers voice input (e.g., user utterances of the user comprising text in natural language) and processes it (e.g., converting the voice input into text in natural language and/or a corresponding control command) if desired by the user. Apart from improving the HCI, this also serves the purpose of improved data integrity, because the system only "listens" to the user with the user's permission.

According to another aspect of the present disclosure, the step(s) of providing the one or more content options and/or providing the content item may (each) require an amount of time, which might be longer as the user wants to wait, or which the user might use to do other things with the data processing apparatus. The method may further comprise a step of displaying, during the amount of time required for providing the one or more content options and/or the content item, on the display and/or on a touchscreen of the data processing apparatus a visualization indicating a progress of the providing. This way, a user can identify at first glance the current state of the providing process and more importantly whether the system is working on the request. As long as the visualization is displayed, the user has not to worry about potential issues or errors associated with the content request or the like. Accordingly, a user is able to pursue another task while the system is working in the background on providing the requested content option(s) and/or content item. Accordingly, also the displaying of this progress visualization relates to the internal state prevailing in the data processing apparatus and thus enables the user to properly operate the data processing apparatus. The progress visualization may be displayed on the user-selectable control element mentioned further above in association with the fourth user input, which provides a particularly uncluttered and intuitive user interface.

According to another aspect of the present disclosure, the method may further comprise a step of displaying, after expiry of the time required for providing the one or more content options and/or the content item, on the display and/or the touchscreen of the data processing apparatus a visualization indicating completion of the providing. This way, a user can identify at first glance that the data processing apparatus is finished and that the providing of the one or more content options and/or the content item is completed. Also this visualization may be displayed on the user-selectable control element mentioned further above in association with the fourth user input, which provides a particularly uncluttered and intuitive user interface.

Importantly, instead of directly displaying the completed content option(s) and/or the content item on the display and/or touchscreen, only a visualization indicating the completion is provided. This way, undesired interruption of the user's current work is avoided. For example, if a user is currently typing within a document displayed on the display of the data processing apparatus (e.g., via a virtual keyboard displayed on the touchscreen of the data processing apparatus), directly displaying the content option(s) and/or the content item on the touchscreen or display could lead to an undesired interruption and thus to a unpleasant user experience.

According to another aspect of the present disclosure, the step(s) of displaying the one or more content options and/or the content item may be based on receiving a touch input associated with the visualization indicating the completion of the providing. This way, the above-identified unpleasant user experience is avoided. Instead, the content option(s) and/or the content item is only displayed if a corresponding touch input associated with the visualization indicating the completion of the providing is received. Alternatively or additionally, other types of user input such as touchless gesture input and/or voice input can also be implemented to trigger the displaying of the content option(s) and/or content item.

According to another aspect of the present disclosure, the step of receiving the second user input may comprise a step of receiving a set of input content, in particular text, one or more images, one or more videos and/or one or more documents. Providing the content item may be further based on the set of input content. This way, the providing step of the content item can be further specified. The system may receive apart from the selected content option, a set of input content based on which the content item is created.

According to another aspect of the present disclosure, the step(s) of providing the one or more content options and/or the content item may comprise a step of determining one or more tasks required for providing the one or more content options and/or the content item according to the content request. The step(s) of providing the one or more content options and/or the content item may comprise a step of executing one or more applications, including one or more Al applications, capable of accomplishing the one or more tasks. The step(s) of providing the one or more content options and/or the content item may comprise a step of combining outputs of the one or more applications to provide the one or more content options and/or the content item. This way, a user no longer needs to manually search or work for solutions to a task. Instead, it is sufficient to provide a corresponding set of input content and a corresponding requested output/content item and let the system take care of the task and orchestrate their executing.

While the provided content item of the system (in a first iteration) may not be perfect, the user is able to provide corresponding follow up input (e.g., voice input, touch input or touchless gesture input).

The above aspects relating to the task orchestration may be realized using a conversational AI system that seamlessly integrates natural language understanding, context management, and task execution. The system may leverage a large language model (LLM) to engage in meaningful user interactions and/or perform tasks on behalf of the user, enhancing user experience and efficiency. While conventional conversational AI systems have primarily focused on generating responses to user inputs without actively participating in task execution, aspects of the present disclosure may provide an AI system that not only understands natural language but also possesses the capability to execute tasks, thereby providing users with a comprehensive virtual assistant. In other words, the AI system of aspects of the present disclosure may comprise two functionalities: conversational user interaction and task execution, which will be described in more detail in the following.

The conversational user interaction functionality may utilize a pre-trained language model, such as a transformer-based architecture, to engage in natural conversations with users. This may involve a sequence of stages comprising one or more of:
- Data Collection and Preprocessing: A diverse dataset of conversations may be collected and preprocessed by tokenizing text into units for effective model training.
- Model Training and Fine-Tuning: The language model may undergo supervised fine-tuning on specific conversational tasks, enabling it to generate contextually relevant responses to user inputs.
- Context Management: The system may implement context handling mechanisms to comprehend ongoing conversation context, contributing to coherent and engaging dialogues.
- Response Generation: Techniques like beam search or sampling may be employed to generate diverse and coherent responses.

The task execution functionality may expand beyond conversation by equipping the AI system to execute tasks on behalf of users. This may involve one or more of:
- Intent Recognition and Context Understanding: The system may enhance its natural language processing capabilities to accurately recognize user intents and extract task-related details from conversations.
- Task Knowledge Base: A repository of tasks may be created, encompassing instructions, steps, and/or parameters required for task execution.
- Execution Logic: Logical frameworks may be established to map user intents to specific tasks, defining the sequence of actions for successful task completion.
- User Interaction Flow: The system may engage users in a natural interaction flow, seeking input, confirming tasks, and/or providing updates on task progress.
- Error Handling and Security: The system may implement error handling mechanisms, may seek user confirmation for critical tasks, and/or may ensure secure handling of sensitive information.
- Feedback Loop: User feedback may be collected to refine task execution over time, resulting in continuous improvement.

The above-described conversational AI system offers a comprehensive solution that seamlessly integrates user interaction and task execution. By utilizing a pre-trained language model, the system provides contextually relevant responses while extending its capabilities to execute diverse tasks. This holistic approach enhances user experience, efficiency, and productivity, positioning the system as an innovative solution in the field of conversational AI.

This truly revolutionizes user interaction by delivering a versatile virtual assistant capable of engaging in meaningful conversations and effectively performing tasks on behalf of the user.

The above aspects relating to the task orchestration may be realized using any of the functionalities disclosed in European patent application no. 23193281.5 titled "ADAPTABLE VIRTUALIZED HUMAN-MACHINE INTERFACE FOR A PORTABLE COMPUTER", the contents of which are incorporated herein by reference.

According to another aspect of the present disclosure, an amount of content options of the one or more content options provided may depend on a type of the content request.

This way, resource and energy consumption of the system can be better controlled. This might be relevant if the method of the present disclosure is executed on data processing apparatus having limited computing resources. On the other hand, there might be content requests for which more than one content option are superfluous or unreasonable. For rather simple content requests such as providing an image or a email, a high amount of content options may be preferred as for example images are highly depending on the personal taste of the user. On the other hand, for rather complex content requests such as providing a long article about a certain topic (e.g., a topic the user has no knowledge about yet), providing a small amount of content options may be preferred.

According to another aspect of the present disclosure, the type of the content request may be a first type of content request for which only a single content option is generated (and consequently displayed) or a second type of content request for which a plurality of content options is generated (and consequently displayed). It may be preferred that exactly three content options are generated (and consequently displayed). This way, content requests can be classified in either one of the two types. Based on the classification, either one or a plurality of content options may be generated. As explained above, for rather simple tasks or tasks which are highly subjective (e.g., based on the personal taste of a user) providing a plurality of content option to the user to choose from may be preferable to increase the likelihood of providing one content option which meets the user's requirement or taste. On the other hand, providing a plurality of content options for rather complex task may be unreasonable as this would for example consume an unreasonable amount of computing resources or would take a unreasonable amount of time. As a result, a trade-off is presented in which the user is only provided with one content option, but in reasonable time and without consuming an unreasonable amount of computing resources which could negatively impact the user's work on another task.

According to another aspect of the present disclosure, the method may further comprise a step of displaying, upon determining occurrence of an error, on a touchscreen and/or a display of the data processing apparatus a visualization indicating a suggestion to restart the method. The error may be associated with the providing and/or the receiving and/or the displaying step(s) as described herein. This way, a user may identify at first glance that an error with respect to the providing, receiving and/or displaying has occurred. Accordingly, the user may either restart the providing step of the content item and/or option(s), re-issue a certain input or the like. As result, a situation is avoided in which the user is waiting for the content item for an unreasonable amount of time and does not obtain his/her requested item due to the occurred error.

According to another aspect of the present disclosure, the method may further comprise a step of receiving, after providing the one or more content options and/or the content item, a fifth user input, in particular a touch input and/or a touchless gesture input indicating a swipe gesture. The method may further comprise a step of providing, upon receiving the fifth user input, one or more alternative content options. This way, a convenient way is provided for indicating to the system that the user is not satisfied with the provided content options or the content item and requests re-generating of alternative content options. This can be repeated until one of the content options satisfies the user's requirements or at least represents a promising starting point for further improvement iterations (e.g., via the second user input and/or additional set of input contents) to finetune the content option into final provision of the content item.

According to another aspect of the present disclosure, the method may further comprise a step of generating, upon receiving the second user input, a control command to cause a display of a user dialog on the display and/or on a touchscreen of the data processing apparatus. The user dialog may provide one or more content recommendations associated with the selected content option. Providing the content item may be based at least in part on a user selection of the one or more content recommendations. This way, the user is presented with additional recommendations on how to further tune/improve the selected content option. Presenting to the user such a fine granular step by step interaction even though the actual task execution (i.e., providing of the content item is fully automated by the system), improves the HCI because the user is taken by the hand, guided through the process and only requested to provide corresponding input if necessary for the overall goal, namely provisioning of a content item fulfilling the content request.

Another aspect of the present disclosure relates to a data processing apparatus, device or system. The data processing apparatus, device or system may comprise means configured to perform the method of any one of the aspects described throughout the present disclosure. The data processing apparatus, device or system may be a personal computing device, but may also be any type of data processing apparatus, electronic device, computing device, personal computer (PC), stationary computer (e.g., workstation, desktop, server rack), special-purpose device (e.g., gaming console, set-top-box), handheld device, mobile device (e.g., tablet, phablet, smartphone) or electronic device embedded in a technical device or system (e.g., car, machine). This applies to individual aspects disclosed herein as well as to particular combinations of the aspects disclosed herein.

In particular, the data processing apparatus, device or system may be a portable computer. The portable computer may comprise a base housing comprising a touchscreen arranged on a user-facing surface of the base housing, in particular instead of a physical computer keyboard, a top cover flexibly coupled to the base housing and comprising a display arranged on a user-facing surface of the top cover, and a touchless gesture input system. The portable computer may incorporate any of the further characteristics disclosed in European patent application no. 23173257.9 titled "PORTABLE COMPUTER WITH VIRTUALIZED HUMAN-MACHINE INTERFACE", the contents of which are incorporated herein by reference.

Generally speaking, a portable computer may also be referred to as a laptop computer, a notebook computer, or in short as a laptop or a notebook. A portable computer is to be understood as a computer designed to be relatively easily moved from one place to another, as opposed to stationary computers designed to remain at a single location such as desktops, workstations and server racks. A portable computer is typically a portable personal computer (PC), while touchscreen-based handheld devices such as tablets, phablets and smartphones are called mobile devices instead. The portable computer may be configured to run on a desktop operating system such as Microsoft Windows, macOS or Linux, unlike mobile devices which typically run on mobile operating systems such as Android or iOS.

The base housing should be understood as that part of the portable computer which is normally placed on a surface while in use, such as a tabletop or a user's lap. The portable computer may comprise various hardware components, such as central processing unit (CPU), random access memory (RAM), storage medium (e.g., hard drive), graphics card, sound card, motherboard and/or battery power source, most of which may be arranged in the base housing.

The top cover should be understood as that part of the portable computer which holds the display and at the same time serves as a cover or lid when the portable computer is closed. The top cover may comprise a webcam which may be arranged on the user-facing surface of the top cover. The top cover may also comprise a secondary webcam which may be arranged on the outside of the top cover. The display in the top cover may also be referred to as a primary display which provides a primary means of conveying visual information to the user, such as by displaying graphical user interfaces. The display may be an electronic visual display, also referred to as a screen, in particular a flat-panel screen. The display may be an electroluminescent (EL) display, a liquid crystal display (LCD), a light-emitting diode (LED) display, such as an organic light-emitting diode (OLED) display or active-matrix organic light-emitting diode (AMOLED) display, a plasma (P) display, a quantum dot (QD) display, a microLED display, a retina display, an e-ink display or any other suitable display or display stack. The display may comprise a display cover (e.g., a glass, sapphire, or plastic protective cover) and/or other suitable components. The display may have a size which is conventional for portable computers, such as a diagonal size of at least 10, 11, 12, 13, 14, 15, 16 or 17 inch. The base housing may have essentially the same size as the top cover. A projection system is another example of a display or display means which uses light to project an image onto a projection surface such as a screen or wall. A display configured to display three-dimensional content, such as a spatial reality display and/or a holographic display, is another example of a display, as will be described in more detail further below.

The flexible coupling between the base housing and the top cover may be provided by a rotatable, pivotable, spinnable and/or hinged coupling, giving the portable computer its characteristic form factor. The portable computer may be a clamshell-type computer allowing it to be used in the traditional laptop mode or it may be a convertible computer allowing for additional usage modes such as a tablet mode, stand mode or tent mode. The flexible coupling may be detachable, allowing for at least temporally detaching the top cover from the base housing. The portable computer may be closed or folded shut by a user by rotating the top cover towards the base housing so that the inside of the top cover faces the inside of the base housing. The user may open the portable computer such that the inside of the top cover and the inside of the base housing both face the user. Accordingly, the term "user-facing surface" should be understood as the respective surface facing the user when the portable computer is open.

According to another aspect of the present disclosure, the base housing is a housing without a physical computer keyboard. In other words, the base housing, and preferably the entire portable computer, may not comprise a physical computer keyboard. A computer keyboard should be understood as an input device typically modeled after the typewriter keyboard which is configured to allow a user to provide alphanumeric input. In other words, a computer keyboard is typically used as a text entry interface for typing characters (e.g., letters, numbers, punctuation marks) and/or symbols into application software. A computer keyboard typically comprises an arrangement of buttons or keys associated with a set of characters or symbols, and each press of a key typically corresponds to a single written character or symbol, while some characters or symbols may require pressing and holding several keys simultaneously or in sequence. While most keys may produce characters or symbols, other keys (such as the escape key or arrow keys) may prompt the computer to execute system commands. In a physical computer keyboard, the buttons or keys may be physical buttons or keys comprising mechanical levers, electronic switches, or the like, and may have a set of characters, symbols, or other affordances, engraved or printed on them. This way, by omitting a physical computer keyboard according to the above-explained aspect of the present disclosure, the portable computer is effectively freed from the conventional typewriter metaphor and made susceptible to a plethora of new use cases, including but not limited anymore to text entry, some of which will be explained in more detail throughout the present disclosure.

As used herein, a touchscreen should be understood as assembly of both an input device, such as a touch panel, and an output device, such as a display like an electronic visual display as already described further above. The touch panel may be layered on top of the display. A user may give input and/or control the portable computer through simple or multi-touch gestures by touching the screen with one or more fingers and/or an input device such as a stylus. This way, by providing a touchscreen, in particular as a replacement for a physical computer keyboard, the user can interact with the portable computer in a more flexible way thanks to the flexibility in displaying content, control elements and/or other affordances on the touchscreen. In particular, this allows completely new use cases beyond mere text input, as will be explained in more detail throughout the present disclosure.

According to another aspect of the present disclosure, the data processing apparatus may comprise a touchless gesture input system. A touchless gesture input system should be understood as any system which allows a user to interact with the computer using gestures, such as hand movements, without requiring the user to touch the computer for this interaction. The touchless gesture input system may comprise sensing means (e.g., comprising one or more sensor arrangements and/or one or more sensor devices, as will be explained in more detail further below). The sensing means may be configured to observe at least part of an interaction space and/or to capture movements in an (the) interaction space.

The touchless gesture input system may comprise processing means (e.g., comprising software, firmware and/or hardware). The processing means may be configured to detect or determine free-handed, in-air or any other types of gestures performed by the user, or even multiple users, e.g., based on interpreting the captured movements. The processing means may be configured to generate one or more control commands for controlling the data processing apparatus or one or more functions thereof, for causing display of information on the display and/or touchscreen, and/or any other type of relevant function. This way, an even greater degree of virtualization of the human-machine interface is obtained. An interaction space should be understood as comprising or being a 3D space in the nearfield of the data processing apparatus in which the user may provide touchless user input. The limitations of buttons, trackpad, computer mice, and the like, as hardware-based input devices as well as the limitations of touchscreens providing a purely two-dimensional plane are effectively overcome. Instead, the virtualization of the human-machine interface using touchless gesture interaction improves the flexibility of interacting with the computer in more than one way. First of all, the interaction space is not bound to a physical object anymore, and thereby enables a flexible use adapted to the specific user, allows to adapt the way to interact to specific, and in particular completely new, use cases. This is particularly true when the interaction space is a three-dimensional interaction space, as will be explained in more detail throughout the present disclosure.

According to another aspect of the present disclosure, the touchless gesture input system comprises sensing means configured to observe at least part of an interaction space, in particular at least part of the (three-dimensional) interaction space mentioned above. The sensing means may in principle comprise any sensor technology. In one particular aspect of the present disclosure, the sensing means comprises at least a first and a second sensor arrangement. The first and the second sensor arrangements may be respectively arranged at or near opposing upper corners of the top cover. One possible specific implementation will be described in more detail in the detailed description below. Further exemplary sensor arrangements are disclosed in European patent application no. 23165748.7 titled "SENSOR ARRANGEMENT FOR TOUCHLESS CONTROL OF A COMPUTER DEVICE, SENSOR SYSTEM AND ELECTRONIC DEVICE" and European patent application no. 23165755.2 titled "SENSOR ARRANGEMENT FOR TOUCHLESS CONTROL OF A COMPUTER DEVICE, SENSOR SYSTEM AND ELECTRONIC DEVICE", the contents of which are incorporated herein by reference. Techniques for providing a touchless input interface using multiple sensor devices are disclosed in EP 4 083 757 A1 titled "TOUCHLESS INPUT INTERFACE FOR AN ELECTRONIC DISPLAY USING MULTIPLE SENSORS", the contents of which are incorporated herein by reference.

Another aspect of the present disclosure relates to a computer program or a computer-readable medium having stored thereon a computer program, the computer program comprising instructions which, when the program is executed by a data processing apparatus, cause the data processing apparatus to carry out the method of any one of the aspects described herein. The data processing apparatus may be a data processing apparatus according to any one of the aspects described herein. The computer program may be provided as software and/or firmware executable on any data processing apparatus. The computer program may be provided as a distinct product, e.g., for download from a server, app store, or the like or on a non-transitory storage medium. The computer program may be provided as part of the data processing apparatus, i.e., it may be (pre)installed. The computer program may execute at least some of the functions remotely with respect to the data processing apparatus, such as on a computing device connected to the data processing apparatus via a wired or wireless network connection.

The data processing apparatus, devices, systems, methods and/or computer programs disclosed herein may comprise and/or provide an application programming interface (API). The API may be configured for allowing an external application and/or device to use the computer program, such as by invoking an executing of one or more functions and/or by receiving responses. Examples of an external application include without limitation an operating system or an application executing on the data processing apparatus. Examples of an external device include without limitation a sensor device and/or a component of the data processing apparatus such as the touchscreen, touchless gesture input system, or the like.

### BRIEF DESCRIPTION OF THE DRAWINGS

The disclosure may be better understood by reference to the following drawings:
- Fig. 1:: A perspective view of a data processing apparatus in accordance with embodiments of the present disclosure.
- Fig. 2:: A exemplary flowchart of a method of interacting with a data processing apparatus in accordance with embodiments of the present disclosure.
- Fig. 3:: A virtual control panel in accordance with embodiments of the present disclosure.
- Fig. 4:: An exemplary touchscreen layout in accordance with embodiments of the present disclosure.
- Fig. 5:: An exemplary user dialog for entering a content request in accordance with embodiments of the present disclosure.
- Fig. 6:: An exemplary overview of one or more content items in accordance with embodiments of the present disclosure.
- Fig. 7:: A first example of possible interactions with one or more content items in accordance with embodiments of the present disclosure.
- Fig. 8:: A second example of possible interactions with one or more content items in accordance with embodiments of the present disclosure.
- Fig. 9:: An exemplary user dialog providing recommendations in accordance with embodiments of the present disclosure.
- Fig. 10a-c:: Exemplary visualizations in accordance with embodiments of the present disclosure.
- Fig. 11:: A high-level overview of an exemplary implementation in accordance with embodiments of the present disclosure.
- Fig. 12:: A flowchart of an exemplary end-to-end flow of an exemplary implementation from a Virtual Board perspective in accordance with embodiments of the present disclosure.
- Fig. 13:: A flowchart of an exemplary end-to-end flow of an exemplary implementation from an operating system or application perspective in accordance with embodiments of the present disclosure.
- Fig. 14:: A flowchart of an exemplary end-to-end flow of an exemplary implementation from a user perspective in accordance with embodiments of the present disclosure.
- Fig. 15:: A function call overview of an exemplary implementation in accordance with embodiments of the present disclosure.
- Fig. 16:: A flowchart of an exemplary protocol realization of an exemplary implementation in accordance with embodiments of the present disclosure.

### DETAILED DESCRIPTION

In the following, representative embodiments illustrated in the accompanying drawings will be explained. It should be understood that the illustrated embodiments and the following descriptions refer to examples which are not intended to limit the embodiments to one preferred embodiment.

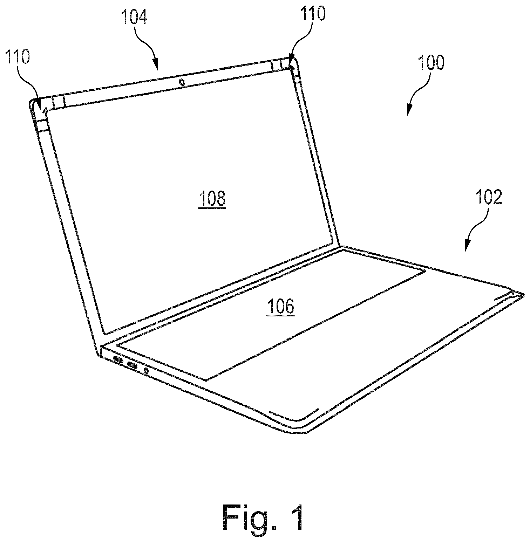

Fig. 1 illustrates a perspective view of a data processing apparatus 100 in accordance with embodiments of the present disclosure. In the illustrated example, the data processing apparatus 100 is shown as a portable computer 100. The portable computer 100 comprises a base housing 102 and a top cover 104. The portable computer 100 is open, thereby revealing respective user-facing surfaces of the base housing 102 and top cover 104. A display 108 is arranged on the user-facing surface of the top cover 104. A touchscreen 106 is arranged on the user-facing surface of the base housing 102. The portable computer 110 comprises a touchless gesture input system 110, which comprises in the illustrated embodiment first and second sensor devices which are arranged at or near opposing upper corners of the top cover 104. However, the touchless gesture input system 110 may comprise other sensor arrangements.

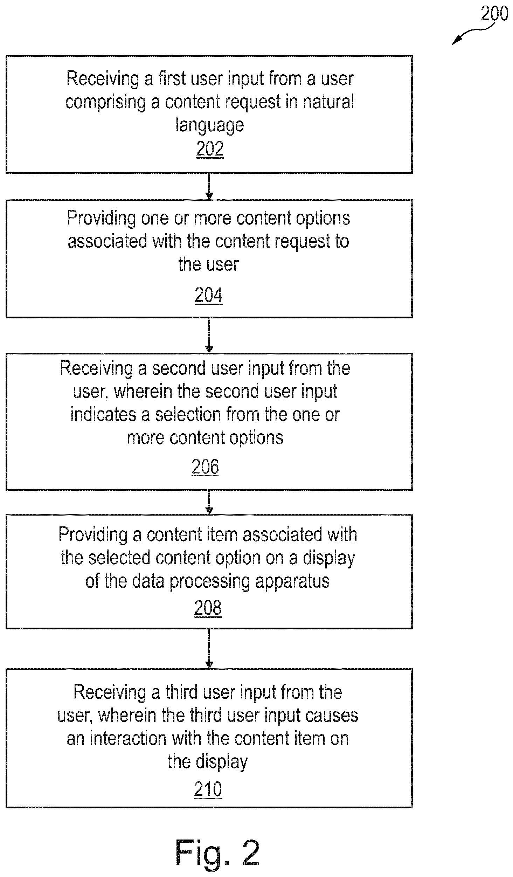

Fig. 2 illustrates a flowchart of a method 200 of interacting with a data processing apparatus 100 in accordance with embodiments of the present disclosure, which will now be described.

In step 202, a first input from a user comprising a content request in natural language is received. In the embodiment discussed here, the first input comprises a voice input (e.g., based on which text in natural language is derived from), a touch input and/or a touchless gesture input.

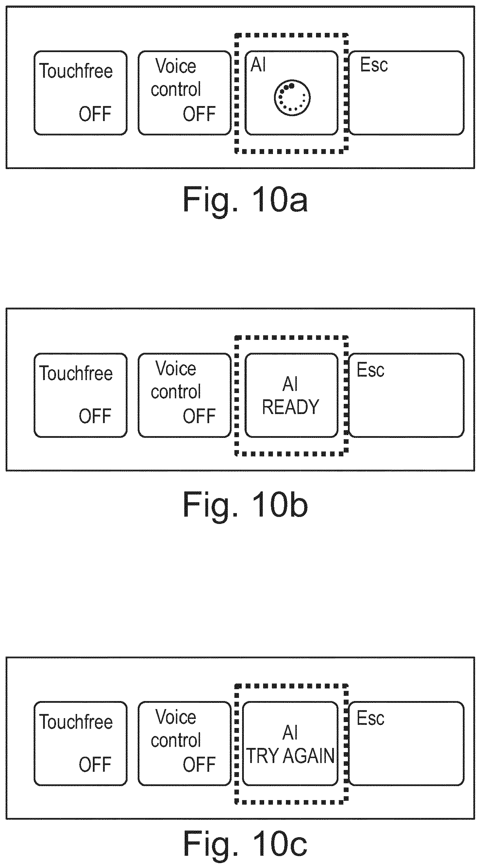

In step 204, one or more content options associated with the content request to the user are provided. The one or more content options associated with the content request may be provided on a touchscreen, in particular a touchscreen arranged on a user-facing surface of a base housing of the data processing apparatus and the second user input may be a touch input on the touchscreen. Providing the one or more content options may comprise displaying the one or more content options on a touchscreen of the data processing apparatus. Providing the one or more content options may comprise determining one or more tasks required for providing the one or more content options, executing one or more application, including one or more AI applications, capable of accomplishing the one or more tasks and combining outputs of the one or more applications to provide the one or more content options. An amount of content options of the one or more content items provided may depend on a type of the content request. The type of the content request may be a first type of content request for which only a single content option is generated or a second type of content request for which a plurality of content options is generated. For example, a content request requesting a draft of an e-mail is a second type and thus a plurality of content options (e.g., different drafts of the e-mail) may be provided. On the other hand, a content request requesting writing of a long article is a first type and thus only a single content option (e.g., one draft of the article) may be provided. Providing the one or more content options may require an amount of time. During the amount of required for providing the one or more content options (i.e., during generation of the one or more content options), a visualization indicating a progress of the providing may be displayed on the display and/or touchscreen of the data processing apparatus. The visualization is further explained with respect to Fig. 10a. After expiry of the time required for providing the one or more content options (i.e., once the one or more content options are generated), a visualization indicating completion of the providing may be displayed on the display and/or the touchscreen of the data processing apparatus. The visualization is further explained with respect to Fig. 10b. Accordingly, a user can conveniently identify the progress/completion of the providing. Displaying the one or more content options may be based on receiving a touch input and/or voice input and/or touchless gesture input associated with the visualization indicating the completion of the providing (i.e., the content option(s) are only displayed if explicitly requested by the user).

In step 206, a second user input from the user is received. The second user input may indicate a selection from the one or more content options. Receiving the second user input may comprise receiving a set of input content, in particular text, one or more images, one or more videos and/or one or more documents. Accordingly, providing the content item may be further based on the set of input content.

In step 208, a content item associated with the selected content option is provided on a display of the data processing apparatus. Providing the content item may comprise displaying the content item on the display of the data processing apparatus. Providing the content item may comprise determining one or more tasks required for providing the content item, executing one or more applications, including one or more AI applications, capable of accomplishing the content item and combining outputs of the one or more applications to provide the content item. Providing the content item may require an amount of time. During the amount of required for providing the content item (i.e., during generation of the content item), a visualization indicating a progress of the providing may be displayed on the display and/or touchscreen of the data processing apparatus. The visualization is further explained with respect to Fig. 10a. After expiry of the time required for providing the content item (i.e., once the content item is generated), a visualization indicating completion of the providing may be displayed on the display and/or the touchscreen of the data processing apparatus. The visualization is further explained with respect to Fig. 10b. Accordingly, a user can conveniently identify the progress/completion of the providing. Displaying the content item may be based on receiving a touch input and/or voice input and/or touchless gesture input associated with the visualization indicating the completion of the providing (i.e., the content item is only displayed if explicitly requested by the user).

In step 210, a third user input from the user is received. The third user input may be a touchless gesture input. The third user input may cause an interaction with the content item on the display. The interaction with the content item may comprise adjusting one or more characteristics of the content item, wherein the one or more characteristics may comprise a position of the content item on the display, a position of the content item within an application and/or a size of the content item. Additionally, or alternatively, the interaction may comprise indicating a content request associated with the content item.

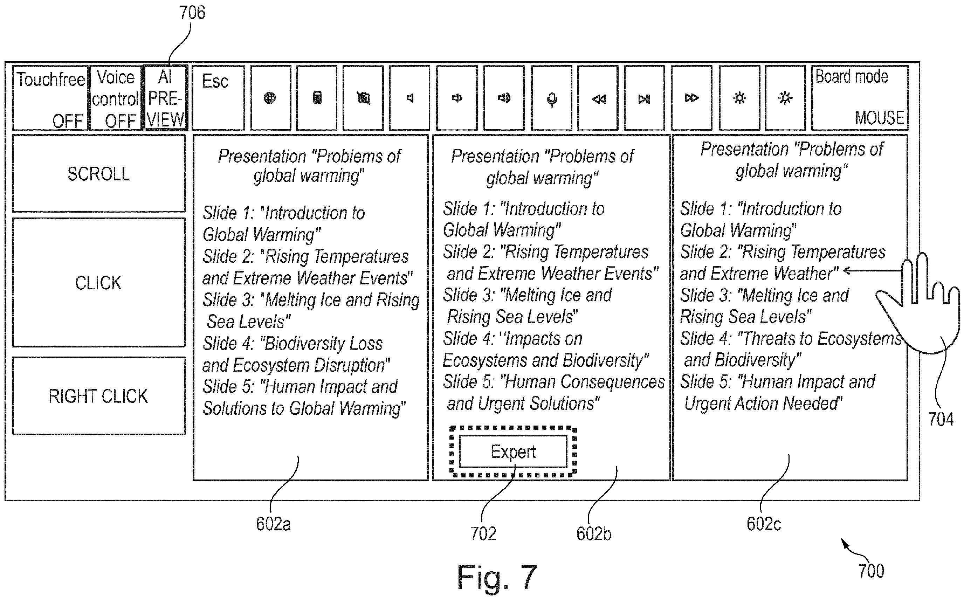

In case occurrence of an error (e.g., due to connection loss etc.) associated with the providing, receiving and/or displaying is determined, a visualization indicating a suggestion to restart the method is displayed on a touchscreen and/or a display of the data processing apparatus. This visualization is further explained with respect to Fig. 10c. Similarly, if a user wishes to stop the step of providing (i.e., generating) the one or more content options and/or content item, the user may provide (i.e., the apparatus receives) a user input (e.g., voice, touch and/or touchless gesture based) indicating that the user wishes to stop the providing. For example, the user may provide a long touch input associated with the visualization indicating the progress of the providing (as explained with respect to Fig. 7). Once the data processing apparatus receives such a user input, providing the one or more content options and/or content item will be stopped.

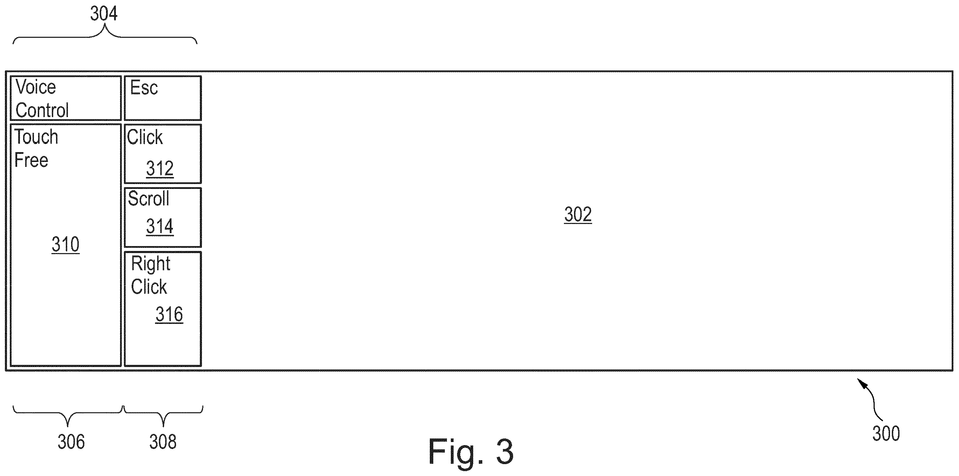

Fig. 3 illustrates an overview 300 of a control panel 304, which is in the illustrated embodiment a virtual control panel 304 displayable on the touchscreen 106 in accordance with embodiments of the present disclosure. In the illustrated embodiment, the control panel 304 is arranged at the left edge of the touchscreen 106 and to the left of a main area 302 of the touchscreen 106. This allows the user to provide touch inputs on the control panel 304 with the left hand while the user may perform touchless input gestures with the right hand. Alternatively, the control panel 304 may be arranged at the right edge of the touchscreen 106 which may be more convenient for users who prefer to perform touchless input gestures with the left hand. In yet another alternative configuration, the control panel 304 may be arranged in other places on the touchscreen 304, e.g., between two halves of a virtual keyboard. The placement of the control panel 304 may be configurable by the user.

The control panel 304 comprises a plurality of user-selectable affordances associated with touchless gesture input. One of the affordances is a touchless gesture input mode indication button 310. Using this button 310, the user may activate a touchless gesture input mode in which touchless input gestures, such as gestures performed with the user's right hand, may be tracked. The touchless gesture input mode may be active as long as the button 310 is activated, i.e., touched. In the illustrated embodiment, the button 310 is arranged in an outermost row 306 of the control panel 304 so that it can be ergonomically reached by a middle finger of the user. This is a particular ergonomic setup because the user's index finger can reach the other affordances arranged on the inner row 308 of the control panel 304, namely a left click button 312, a right click button 316 and a scroll button.

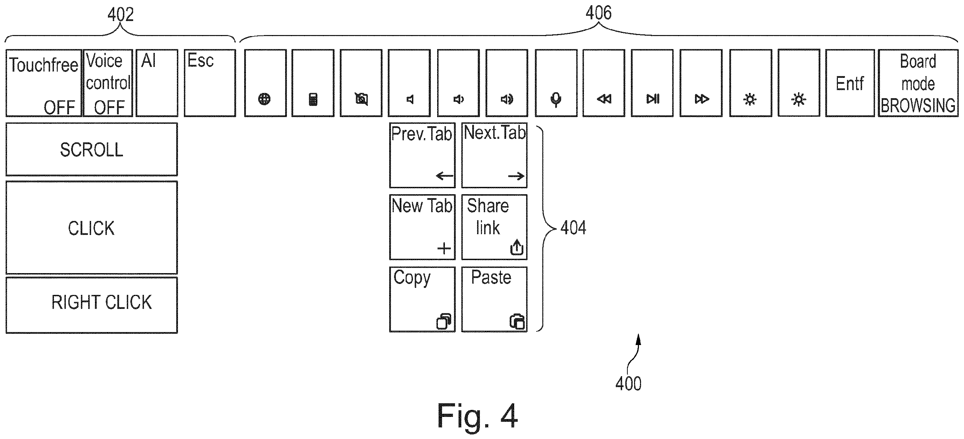

Fig. 4 illustrates an exemplary touchscreen layout 400 in accordance with embodiments of the present disclosure. The illustrated touchscreen layout 400 may be displayed on the touchscreen 106. The illustrated touchscreen layout 400 may comprise a plurality of user-selectable affordances such as a control panel 402 similar to the control panel 304 of Fig. 3.

The difference (apart from slightly different positions of the affordances) between the control panel 402 and the control panel 304 is that the control panel 402 comprises an additional "AI" affordance. The functionality provided by the "AI" affordance is explained in more detail with respect to Figs. 1 0a-c. As already described with respect to Fig, 3, the layout of the touch screen may be adjusted (e.g., user configured, or application based) to provide functionality better suited to a current usage of the data processing apparatus. For example, the touchscreen layout 400 may be adjusted to better fit the use case of web browsing. Accordingly, the main area 302 of the touchscreen layout 400 may comprise affordances 404 and 406. Affordances 404 are designed for making navigation within a web browser more user friendly such as switching between tabs, opening a new tab, sharing a link, copy and paste and affordances 406 are designed for providing additional functionality such as opening of a web browser, opening a calculator, webcam activation/deactivation, mute sound, decrease sound, increase sound, microphone activation/deactivation, rewind, play/pause, forward, decrease brightness, increase brightness, delete and a button for activating/deactivating (i.e., displaying or hiding) of the affordances 404.

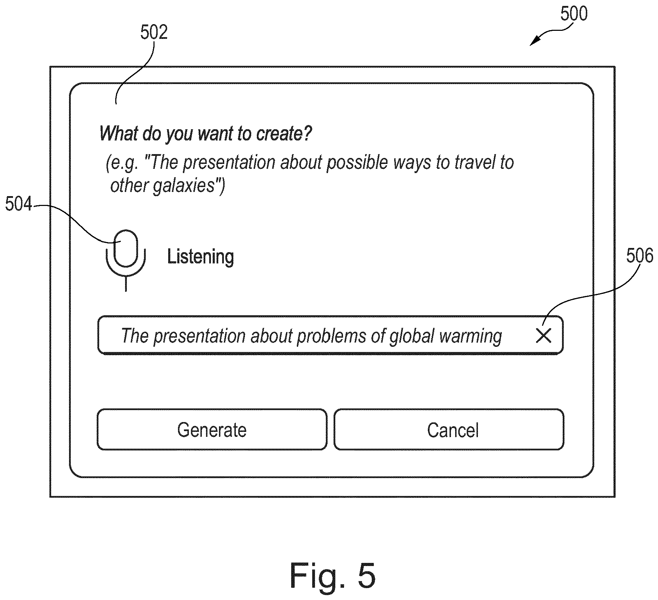

Fig. 5 illustrates an exemplary user dialog 500 for entering a content request in accordance with embodiments of the present disclosure. The user dialog 500 may be displayed upon receiving a fourth user input. The fourth user input may be a touch input on a touchscreen of the data processing apparatus and/or a touchless gesture input. In particular, receiving the fourth user input may generate a control command causing display of the user dialog 500. As can be seen, the user dialog 500 prompts the user 502 to enter the first user input indicating the content request. In addition, upon receiving the fourth user input, a speech-to-text module of the data processing apparatus may be activated so that the data processing apparatus can receive voice input and convert it via the module into a control command based on which the one or more content options may then be provided. Activating or deactivating in this context may relate to a switch between a first mode in which the data processing apparatus does not listen to voice spoken by a user (i.e., the speech-to-text module is deactivated or in a sleep mode) and a second mode in which the apparatus listens to voice spoken by the user (i.e., the speech-to-text module is activated or in an active mode).

In the illustrates example, the user dialog 500 displays "What do you want to create?" to the user as a prompt 502 and also displays an exemplary content item (e.g., "The presentation about possible ways to travel to other galaxies"). The displayed exemplary content item may be a content item the user was working on previously. The word "listening" next to the microphone icon 504 indicates that the speech-to-text module is activated, and that the data processing apparatus is able to receive voice input from the user. In case the user provides voice input (i.e., the user speaks), said voice input is then converted into a control command (e.g., in text form). The control command may then be displayed in the input field 506. Alternatively, the user may also provide text input directly into the input field 506. Once the first user input is received (e.g., either via text, text in natural language, voice etc.) and thus the content request indicated to the data processing apparatus, the one or more content options and/or the content item can be provided (e.g., generated) based on the content request.

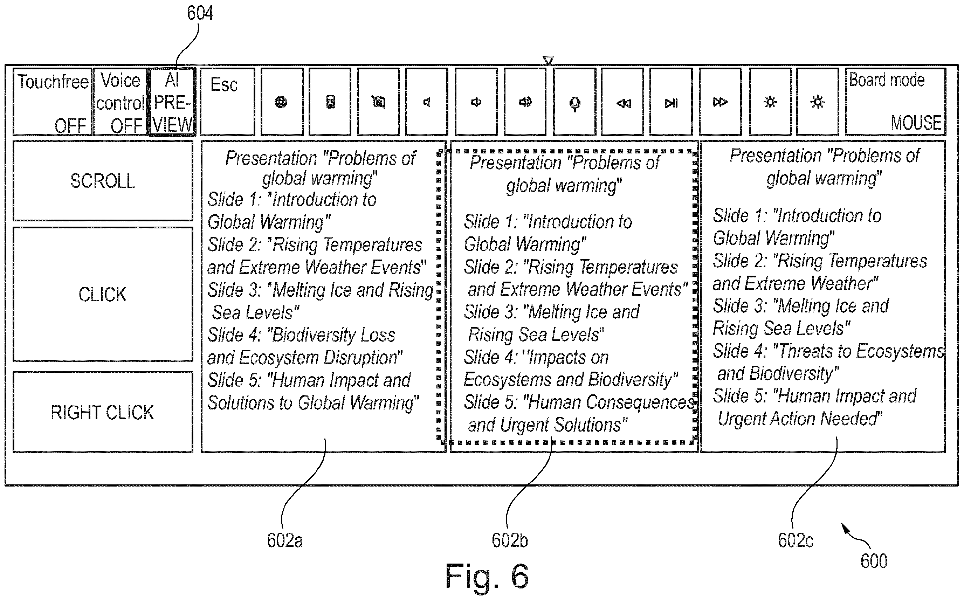

Fig. 6 illustrates an exemplary overview 600 of one or more content options 602a-c in accordance with embodiments of the present disclosure. The one or more content options 602a-c may be provided in response to receiving a first user input (e.g., as described with respect to Fig. 5.). The one or more content options 602a-c may be associated with the content request (e.g., according to the content request indicating a certain content item, one or more content options 602a-c may be provided, wherein each content item represents a different draft/option e.g., with respect to content, style etc.). For example, if the content request is to generate a presentation about problems of global warming, each content option may provide a different structure of the presentation. Accordingly, upon selection by the user of one of these content options via a second user input, the requested content item can be provided (e.g., the presentation based on the selected presentation structure). In order to indicate to a user that a preview of the one or more content items is available (i.e., the content items are generated), a corresponding visualization 604 may be displayed on the touchscreen/display of the data processing apparatus. In the shown example, the visualization 604 is displayed on the touchscreen. Upon completion of the providing of the one or more content items, the visualization 604 (e.g., AI affordance) may display the completion (e.g., by changing the wording of the affordance to "AI preview" or the like and/or by adding visualization effects such as pulsing and/or adjusted brightness etc.). It thus may be possible that the one or more content items are either directly (i.e., upon completion) provided (e.g., displayed on the touchscreen and/or display) or that the one or more content items are only provided (e.g., displayed on the touchscreen and/or display) if a user input (e.g., a touch input associated with the visualization 604 and/or a touchless gesture input) is received. Either way, once a second user input is received (as indicated by the dotted line around content option 602b in this example) the method of the present disclosure may continue to provide a content item associated with the selected content option (e.g., 602b).

While in the illustrated examples, the one or more content options 602a-c are displayed on a touchscreen (e.g., within a main area 302 of the touchscreen layout), the one or more content options 602, may additionally or alternatively be displayed on a display of the data processing apparatus. In case the content options 602a-c are displayed on the touch screen, the second user input may be a touch input on the touch screen. The touchscreen may be arranged on a user-facing surface of a base housing of the data processing apparatus. If the content options 602a-c are displayed on the display of the data processing apparatus, the second input may be a touchless gesture input.

Fig. 7 illustrates a first example 700 of possible interactions with one or more content options 602a-c in accordance with embodiments of the present disclosure. The example illustrated in Fig. 7 shows the same content options 602a-c as provided and explained with respect to Fig. 6. In contrast, Fig. 7 illustrates additional user interactions with the data processing apparatus.

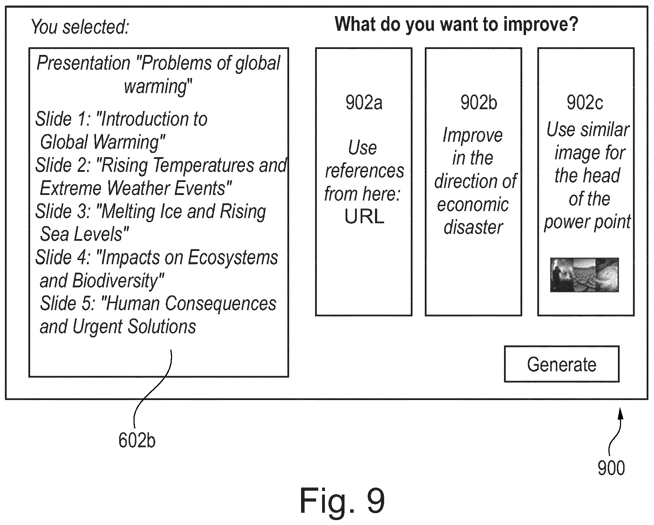

According to a first exemplary implementation of the data processing apparatus, a user may provide a user input (i.e.,, the data processing apparatus receives the user input), on an affordance 702 displayed on the touchscreen (e.g., the user input is a touch input) and/or the display of the data processing apparatus (e.g., the user input is a touch input and/or a touchless gesture input). Upon receiving said user input, a control command may be issued which causes a display of a user dialog as explained in more detail with respect to Fig. 9. Additionally or alternatively, said user dialog may be displayed upon receiving the second user input (i.e., the user input indicating a selection from the one or more content options 602a-c).

Additionally or alternatively, the functionality as explained with respect to the affordance 702 may be integrated into an already displayed affordance such as affordance 706 (i.e., it is not required to display an affordance solely dedicated to the functionality of causing display of the user dialog). Instead, said functionality can be integrated into an already existing affordance 706 and by providing different ways of interacting with the affordance different functionality may be triggered. For example, upon receiving a touch input on the affordance 706, it may be determined which type of touch input was provided. A first type may be a normal touch input (e.g., a tapping of the touch screen) which results in the functionality being triggered as explained with respect to the visualization 604 of Fig. 6. A second type may be a long touch input (e.g., a tap and hold input, where a user taps the touchscreen but holds his/her finger on the tapped spot for a certain duration i.e., a longer duration compared to the normal touch input) which results in the functionality being triggered as explained with respect to affordance 702.

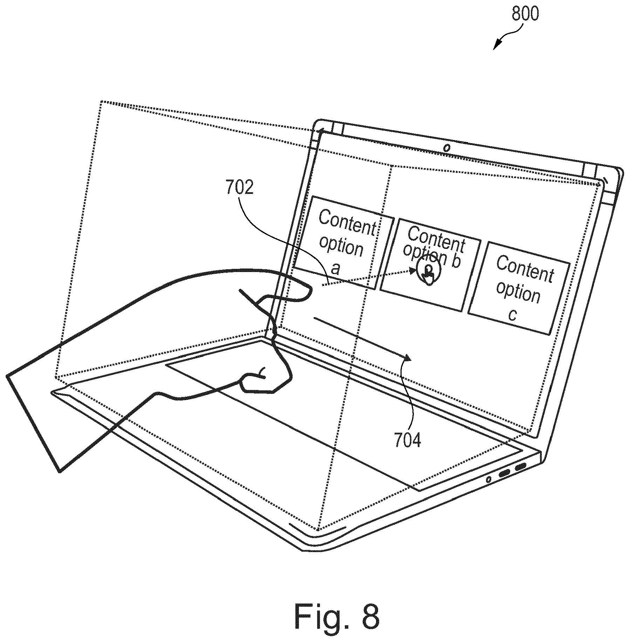

According to a second exemplary implementation of the data processing apparatus, which may be combined with the above explained first implementation, a fifth user input 704 may be received after providing the one or more content options 602a-c. The fifth user input 704 may indicate a swiping movement. The fifth user input 704 may be a touch input where the user places his/her finger on the touchscreen and swipes into a direction. Additionally or alternatively, the fifth user input 704 may be touchless gesture input indicating a swipe gesture as explained in more detail with respect to Fig. 8. Either way, upon receiving the fifth user input 704, a regeneration process (e.g., via a corresponding control command) may be triggered. As a result, one or more alternative content options may be provided. This way, if a user is not satisfied with the provided one or more content options 602a-c, a convenient interaction is provided to regenerate alternative content options which may better suit the needs of the user.

Fig. 8 illustrates a second example of possible interactions with one or more content options 602a-c in accordance with embodiments of the present disclosure. This example illustrates a situation in which the one or more content options 602a-c are provided on a display of the data processing apparatus and wherein a user is able to interact with the data processing apparatus via touchless gesture inputs (e.g., tracked via a touchless gesture input system).

Examples of touchless gesture inputs may be a finger pointing gesture 702 as indicated by the dotted arrow, a swiping gesture 704 as indicated by the arrow or the like. Touchless gesture input allows a user to interact with a system (e.g., a data processing apparatus) without physical contact and present a novel and more natural thus convenient way of interacting with a system. For example, a user may select by providing a corresponding touchless gesture input (e.g., a finger pointing gesture 702) one of the one or more content options based on which the content item may then be provided. In another example, a user may provide a swiping gesture 704 based on which the data processing apparatus can determine that the user is not satisfied with the provided one or more content options and thus provides one or more alternative content options as explained above with respect to Fig. 7. It is to be understood that every interaction as explained with affordances and the touchscreen may also be performed using any combination of touchless gestures and/or voice input as long as corresponding GUI elements are displayed on the display of the data processing apparatus.

Fig. 9 illustrates an exemplary user dialog 900 providing recommendations 902a-c in accordance with embodiments of the present disclosure. It is to be understood that this is only an example of the user dialog 900 and that positions, design etc. of the displayed elements can vary.

As explained with respect to Fig. 7, a user dialog 900 may be displayed upon receiving a corresponding user input (e.g., touch input on a dedicated user affordance 702, a touch input on an integrated affordance 706 or the like). As can be seen, the user dialog comprises on the left side the selected content option (e.g., 602b) which was previously provided and selected by the user as explained with respect to Figs. 6 and 7. In addition, user dialog comprises one or more content recommendations 902a-c associated with the selected content option 602. These content recommendations 902a-c may provide certain recommendations for further improvement of the (either already generated or to be generated) content item. In the illustrated example in which a power point presentation about problems of global warming was requested a first recommendation 902 may recommend including information of a certain URL (e.g., website etc.). The URL may either be already provided to the user (e.g., the system identified a website with potentially relevant information for the presentation) or a user may be able to provide a corresponding URL on its own. A second recommendation 902b may for example suggest to improve/adapt the content of the presentation in a certain way (e.g., tuning the presentation into the direction of economic disaster caused by global warming). A third recommendation 902c may then suggest use of certain images to improve the overall appearance of the presentation.

The user dialog 900 may be displayed on a display of the data processing apparatus and/or on a touchscreen of the data processing apparatus. Accordingly, interaction with the dialog may be touch based (i.e., interaction via touch inputs) and/or via touchless gestures (i.e., via touchless gesture inputs) and/or via voice input. In either way, a corresponding user input may be received indicating a user selection of the one or more recommendations 902a-c. Said selection may then be taken into account when providing (e.g., generating) the content item (i.e., providing the content item may at least be based on the selected content option and the one or more selected content recommendations 902a-c).

Fig. 10a illustrates an exemplary visualization in accordance with embodiments of the present disclosure. The visualization as marked by the dotted square indicates a progress of providing the one or more content options and/or the content item according to the aspects of the present disclosure. In this example, the progress may be indicated by a loading icon which is displayed within the AI affordance and for the amount of the duration required for providing.

Fig. 10b illustrates an exemplary visualization in accordance with embodiments of the present disclosure. The visualization as marked by the dotted square indicates a completion of providing the one or more content options and/or the content item according to the aspects of the present disclosure. In this example, the completion may be indicated by a changing of color of the AI affordance (e.g., the AI affordance may be colored in green upon completion). In addition, the text displayed within the AI affordance may change (e.g., "ready", "completed" etc.). In addition, the AI affordance may start pulsing (e.g., by adjusting -increasing and decreasing- the brightness of the AI affordance according to a predefined pulsing rhythm).

Fig. 10c illustrates an exemplary visualization in accordance with embodiments of the present disclosure. The visualization as marked by the dotted square indicates occurrence of an error. In this example, the error may be indicated by a changing of color of the AI affordance (e.g., the AI affordance may be colored in yellow or red upon occurrence of an error). In addition, the text displayed within the AI affordance may change (e.g., "try again", "error" etc.). In addition, the AI affordance may start pulsing (e.g., by adjusting increasing and decreasing the brightness of the AI affordance according to a predefined pulsing rhythm).

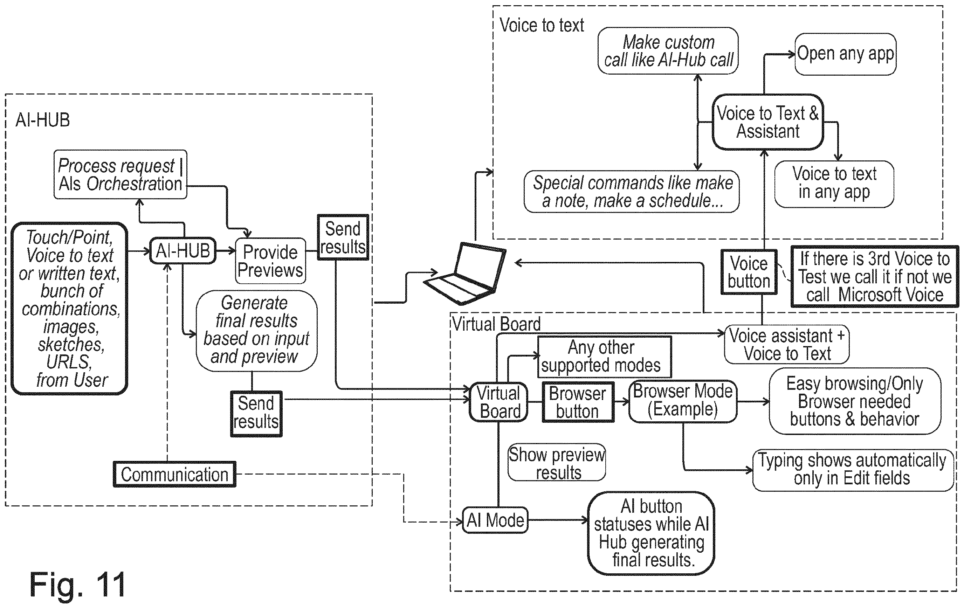

Fig. 11 shows a high-level overview of an exemplary implementation of certain aspects disclosed herein in accordance with embodiments of the present disclosure. A portable computer is shown in the center of Fig. 11 as one example of a data processing apparatus. The block labelled "Voice to text" illustrates certain functions and characteristics of inputting a first user input comprising a content request. The block "Virtual Board" illustrates certain functions and characteristics of the control panel described elsewhere in the present disclosure (the terms "control panel" and "virtual board" should be understood as synonyms). The block "AI-Hub" illustrates certain functions and characteristics associated with the functionality of providing the one or more content options and/or the content item described elsewhere in the present disclosure (the term "AI-Hub" should be understood as a placeholder for any software-based functionality to perform the respective functions). It should be understood that the embodiment of Fig. 11, as well as the embodiments described below, are only possible exemplary conceptual implementations of the principles disclosed herein. As a result, while certain details may resemble with certain principles, other details may differ. With this in mind, the skilled reader will appreciate that many of the details disclosed in Figs. 11-16 can be freely combined while others can be left out.

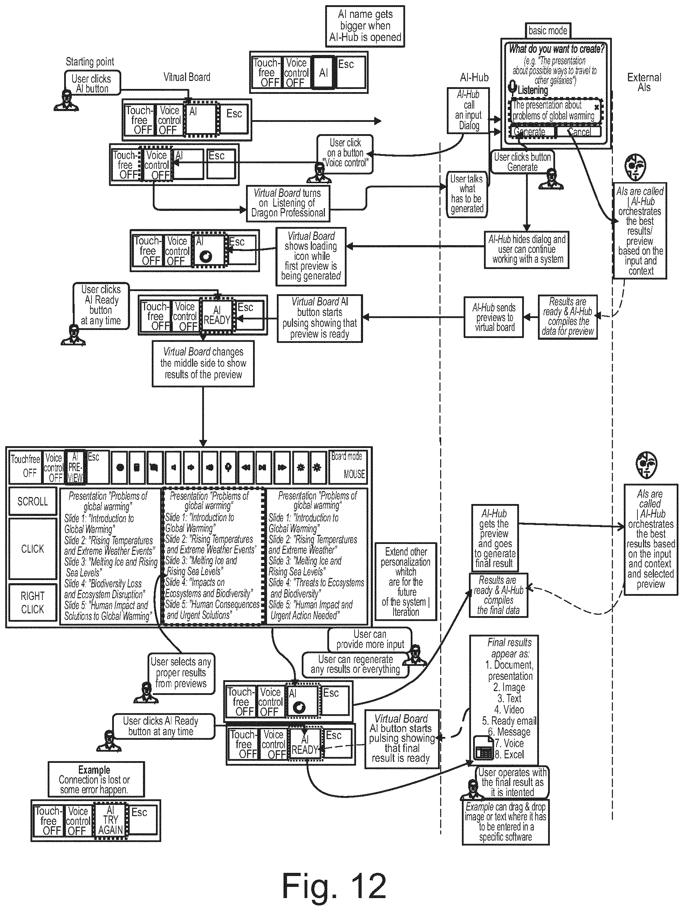

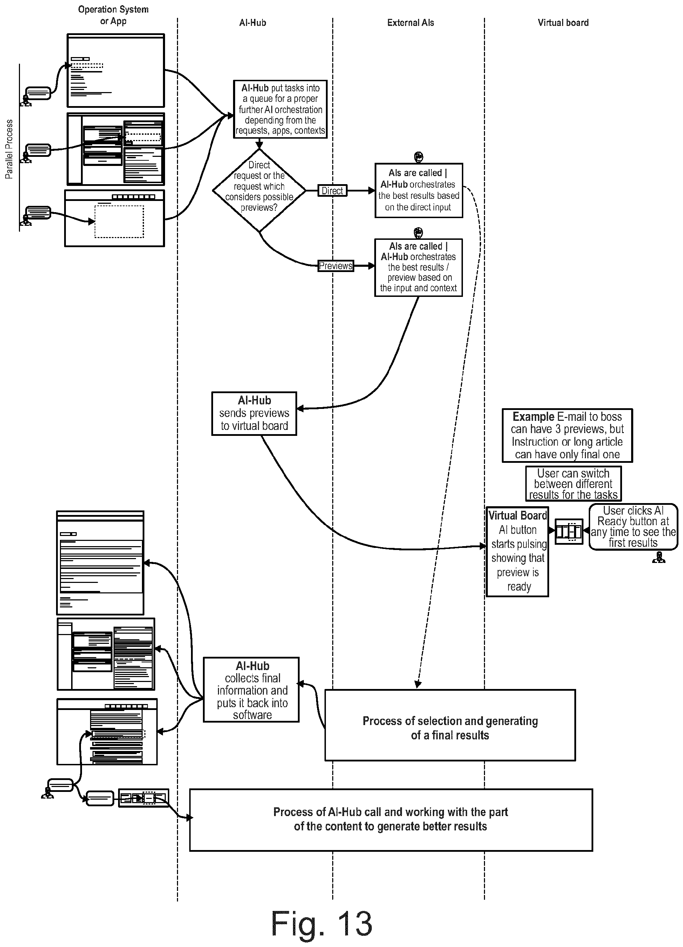

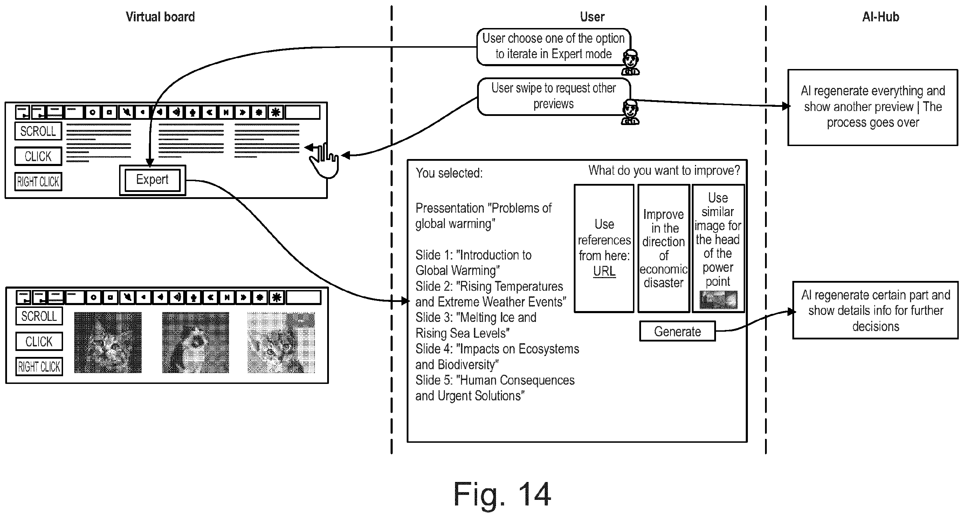

A complete end-to-end flow of an exemplary implementation in accordance with embodiments of the present disclosure from different viewpoints will be described next with reference to Figs. 12-14. Fig. 12 shows an exemplary flow from the perspective of the Virtual Board. Fig. 13 shows an exemplary flow from the perspective of an operating system or an application. Fig. 14 shows an exemplary flow from the perspective of the user.

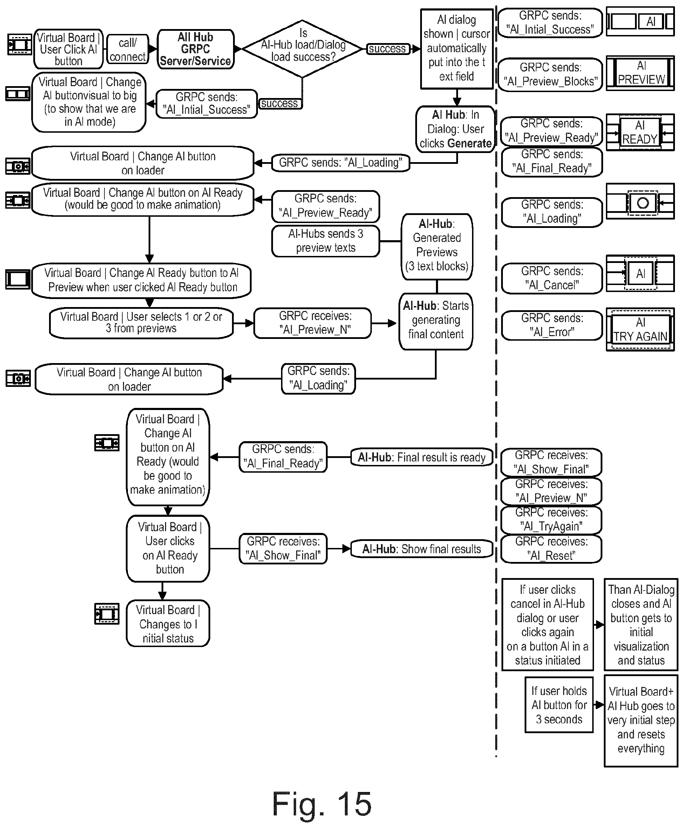

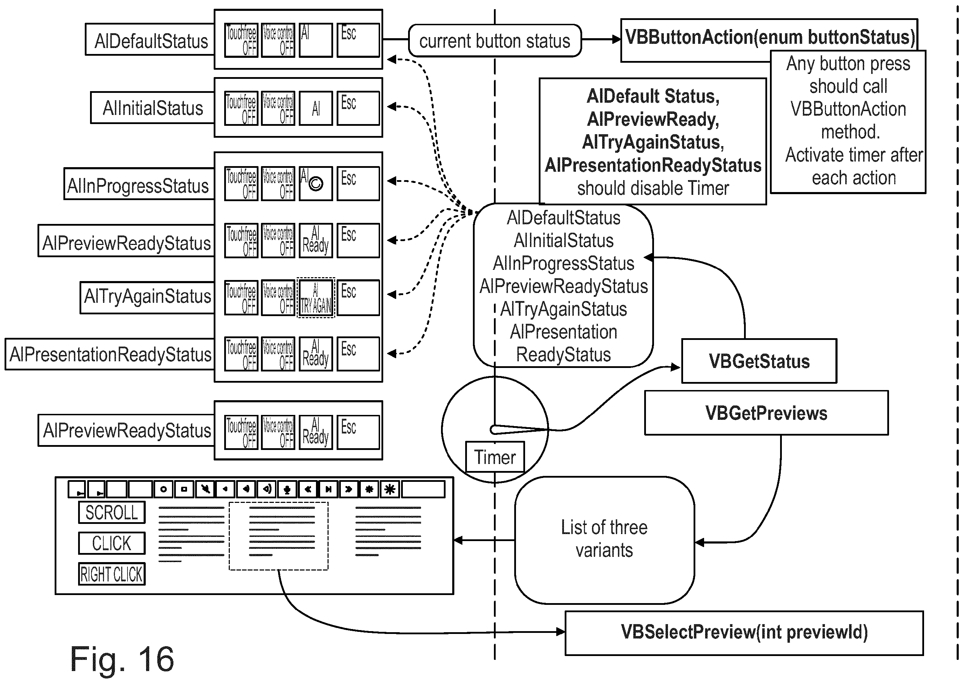

Fig. 15 shows a function call overview of an exemplary implementation and Fig. 16 shows a flowchart of an exemplary protocol realization of an exemplary implementation in accordance with embodiments of the present disclosure.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Embodiments of the present disclosure may be implemented on a computer system. The computer system may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system may comprise any circuit or combination of circuits. In one embodiment, the computer system may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), or any other type of processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more memory elements suitable to the particular application, such as a main memory in the form of random-access memory (RAM), one or more hard drives, and/or one or more drives that handle removable media such as compact disks (CD), flash memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the present disclosure can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the present disclosure comprise a data carrier having electronically readable control signals, which are capable of cooperating with a programmable computer system, such that one of the methods described herein is performed.

Generally, embodiments of the present disclosure can be implemented as a computer program product with a program code, the program code being operative for performing one of the methods when the computer program product runs on a computer. The program code may, for example, be stored on a machine-readable carrier.

Other embodiments comprise the computer program for performing one of the methods described herein, stored on a machine-readable carrier.

In other words, an embodiment of the present disclosure is, therefore, a computer program having a program code for performing one of the methods described herein, when the computer program runs on a computer.

A further embodiment of the present disclosure is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitory. A further embodiment of the present disclosure is an apparatus as described herein comprising a processor and the storage medium.

A further embodiment of the present disclosure is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the present disclosure comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

## Claims

1. A method of interacting with a data processing apparatus (100), the method comprising:
receiving a first user input from a user comprising a content request in natural language;
providing one or more content options associated with the content request to the user;
receiving a second user input from the user, wherein the second user input indicates a selection from the one or more content options;
providing a content item associated with the selected content option on a display (108) of the data processing apparatus (100); and
receiving a third user input from the user, which is a touchless gesture input, wherein the third user input causes an interaction with the content item on the display (108).

2. The method of claim 1, wherein the first user input is a touchless input, in particular wherein the first user input comprises a voice input; and
wherein, optionally, the first user input further comprises a touchless gesture input, in particular to provide contextual information for the voice input.

3. The method of claim 1 or 2, wherein:
the one or more content options associated with the content request are provided on a touchscreen (106), in particular a touchscreen (106) separate from the display (108), more particularly a touchscreen (106) arranged on a user-facing surface of a base housing (102) of the data processing apparatus (100) when the data processing apparatus (100) is a portable computer; and
the second user input is a touch input on the touchscreen (106).

4. The method of any one of preceding claims, wherein the interaction with the content item comprises adjusting one or more characteristics of the content item, wherein the one or more characteristics comprise:
a position of the content item on the display;
a position of the content item within an application; and/or
a size of the content item.

5. The method of any one of the preceding claims, wherein the interaction with the content item comprises indicating a further content request associated with the content item.

6. The method of any one of the preceding claims, further comprising:
receiving a fourth user input, in particular a touch input on a touchscreen of the data processing apparatus, in particular the touchscreen mentioned in claim 3; and
generating, upon receiving the fourth user input, a control command to cause a display of a user dialog on the display of the data processing apparatus, wherein the user dialog prompts the user to enter the first user input indicating the content request;
wherein the method further comprises activating, upon receiving the fourth user input, a speech-to-text module of the data processing apparatus, wherein the speech-to-text module is configured to convert a voice input into a control command based on which the one or more content options are provided.

7. The method of any one of the preceding claims, wherein providing the one or more content options and/or providing the content item requires an amount of time and wherein the method further comprises:
displaying, during the amount of time required for providing the one or more content options and/or the content item, on the display and/or on a touchscreen of the data processing apparatus a visualization indicating a progress of the providing;
displaying, after expiry of the time required for providing the one or more content options and/or the content item, on the display and/or the touchscreen of the data processing apparatus a visualization indicating completion of the providing;
wherein, optionally, displaying the one or more content options and/or the content item is based on receiving a touch input associated with the visualization indicating the completion of the providing.

8. The method of any one of the preceding claims, wherein receiving the second user input comprises:
receiving a set of input content, in particular text, one or more images, one or more videos and/or one or more documents; and
wherein providing the content item is further based on the set of input content.

9. The method of any one of the preceding claims, wherein providing the one or more content options and/or the content item comprises:
determining one or more tasks required for providing the one or more content options and/or the content item according to the content request;
executing one or more applications, including one or more AI applications, capable of accomplishing the one or more tasks; and
combining outputs of the one or more applications to provide the one or more content options and/or the content item.

10. The method of any one of the preceding claims, wherein an amount of content options for the content item provided depends on a type of the content request; and preferably wherein the type of the content request is one of:
a first type of content request for which only a single content option is generated; or
a second type of content request for which a plurality of content options, in particular three content options, is generated.

11. The method of any one of the preceding claims, further comprising:
receiving, after providing the one or more content options and/or the content item, a fifth user input, in particular a touch input and/or a touchless gesture input, indicating a swipe gesture; and
providing, upon receiving the fifth user input, one or more alternative content options.

12. The method of any one of the preceding claims, further comprising:
generating, upon receiving the second user input, a control command to cause a display of a user dialog on the display and/or on a touchscreen of the data processing apparatus;
wherein the user dialog provides one or more content recommendations associated with the selected content option; and
wherein providing the content item is based at least in part on a user selection of the one or more content recommendations.

13. The method of any one of the preceding claims, wherein the data processing apparatus is a portable computer comprising:
a base housing (102) comprising a touchscreen (106) arranged on a user-facing surface of the base housing (102);
a top cover (104) flexibly coupled to the base housing (102) and comprising a display (108) arranged on a user-facing surface of the top cover (104); and
a touchless gesture input system (110).

14. A data processing apparatus, in particular a personal computing device, more particularly a portable computer, comprising at least one means configured to perform the method of any one of claims 1-13.

15. A computer program or a computer-readable medium having stored thereon a computer program, the computer program comprising instructions which, when the program is executed by a data processing apparatus, cause the data processing apparatus to carry out the method of any one of claims 1-13.
